(19) Europäisches Patentamt
European Patent Office
Office européen des brevets

(11) **EP 1 847 856 A1**

(12) **EUROPEAN PATENT APPLICATION**

(43) Date of publication:
**24.10.2007 Bulletin 2007/43**

(51) Int Cl.:
***G01W 1/10*** *(2006.01)*

(21) Application number: **06008341.7**

(22) Date of filing: **21.04.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Fondazione Torino Wireless**
**10129 Torino (IT)**

(72) Inventors:
• **Pasero, Eros**
**10100 Turin (IT)**

• **Moniaci, Walter**
**10100 Turin (IT)**

(74) Representative: **Grünecker, Kinkeldey,**
**Stockmair & Schwanhäusser**
**Anwaltssozietät**
**Maximilianstrasse 58**
**80538 München (DE)**

Remarks:
Amended claims in accordance with Rule 86 (2) EPC.

(54) **Method and system for forecasting an ambient variable**

(57) The invention is directed to a method for determining a subset of input parameters for forecasting at least one ambient variable, in particular, a meteorological variable and/or a pollutants concentration, comprising the steps of providing a set of input parameters, for the at least one ambient variable, selecting at least two subsets of the set of input parameters, for each subset, determining the difference of a joint entropy of the input parameters of the subset and the ambient variable and a joint entropy of the input parameters of the subset, and selecting the subset of input parameters showing the smallest entropy difference.

Fig. 2

**Description**

FIELD OF THE PRESENT INVENTION

The invention is directed to a method and a system for forecasting at least one ambient variable, in particular, a meteorological variable and/or a pollutants concentration.

DESCRIPTION OF THE PRIOR ART

Prediction of ambient or environmental conditions and variables is of major importance in different fields, particularly for road traffic. Based on recently or currently measured ambient variable values such as air temperature, air humidity, etc., it is the aim to predict the behavior of corresponding ambient variables over some time period.
Most monitoring and forecast systems use complex calculation algorithms to predict meteorological and environmental conditions on a large scale, i.e., over a large area. These systems are very complex and elaborate in view of the required data input and the prediction algorithms. Often, data from a vast number of weather stations distributed over a country or at least a large region is collected and processed for forecast purposes.
However, these prior art systems have the disadvantage that, on a smaller scale, the accuracy and reliability is rather poor. Forecast systems are neither intended to forecast environmental conditions at a specific location or in a small region.
It is, therefore, a problem underlying the present invention to provide a method and a system for forecasting an ambient variable having a higher accuracy and reliability on a small scale.

SUMMARY OF THE INVENTION

This problem is solved by a method for determining a subset of input parameters for forecasting at least one ambient variable according to claim 1, a system for forecasting at least one ambient variable in accordance with claim 13, and a method for forecasting at least one ambient variable in accordance with claim 19.
Accordingly, a method for determining a subset of input parameters for forecasting at least one ambient variable, in particular, a meteorological variable and/or a pollutants concentration, is provided, comprising the steps of:

   (a) providing a set of input parameters,

   (b) for the at least one ambient variable, selecting at least two subsets of the set of input parameters,

   (c) for each subset, determining the difference of a joint entropy of the input parameters of the subset and the ambient variable and a joint entropy of the input parameters of the subset,

   (d) selecting the subset of input parameters showing the smallest entropy difference.

This method allows to specifically select a subset of input parameters which is most suitable to predict a given ambient variable. In particular, depending on the type of ambient variable or environmental variable and the time and/or position for which this variable is to be forecast, the most suitable subset of input parameters might differ. After having determined such an optimal set of input parameters, the values of these parameters at given times can be used to predict values of the ambient variable at given future forecast times, i.e. times for which an ambient variable is to be forecast. In this way, a best set of predictors is determined to forecast a specific predictand. A subset can comprise one element, more than one element, or all elements of the set of input parameters.
The entropy of a variable is a negative of the sum of the probability that the variable is in a particular state times the logarithm of this probability, wherein the sum goes over all possible states of this variable. In particular, if the variable has a continuous probability density function, the entropy is the negative of the integral over the whole domain of the product of this probability density function and the logarithm of the probability density function. For determining a joint entropy, a joint probability is used.
It turns out that a subset of input parameters for which this joint entropy difference is minimal yields excellent results, particularly on a small scale, when used as predictors for forecasting a corresponding ambient variable.
The joint entropy can be determined using a predetermined value for each input parameter and a predetermined value for the at least one ambient variable. These predetermined values can be stored in a database. In particular, the predetermined values can result from measurements of the input parameters and ambient variables. For example, a database can comprise a plurality of records of different ambient variable values at given times and/or positions. Such a database of historical values is an advantageous way to determine an optimal subset of input parameters for predicting an ambient variable.

In the above-described method, the probability density function of each joint entropy can be estimated by the Parzen method. The Parzen method, sometimes also called Parzen window method or kernel density estimation, estimates a probability density function by a superposition or sum of kernel functions (see E. Parzen "On Estimation of a Probability Density Function and Mode", Ann. Math. Stat., Volume 33, pages 1065 - 1076, 1962).

The Parzen method yields an excellent estimation of the joint probability density function. Alternative methods to estimate the joint probability density functions are, for example, the maximum likelihood method, or the histogram method.

Different kernel functions can be used for the Parzen method. One possibility is a triangular function. However, it is advantageous to use a Gaussian function as kernel function. If the subsets of input parameters are multi-dimensional, multivariate Gaussian distributions can be chosen. In particular, the probability function can be estimated using a sum of multivariate Gaussian kernels, wherein the covariance matrix of each Gaussian kernel is a diagonal matrix.

In particular, each Gaussian kernel can be centered at a predetermined value for an input parameter of one of the subsets or a predetermined value of the at least one ambient variable.

When selecting the at least two subsets of the set of input parameters, these subsets can have the same number of elements.

According to one aspect, some or all correlation coefficients of the Gaussian distributions can be set to zero. In this case, an estimated probability density function can have the form:

$$P_X^*(X; \mathbf{D}, \Lambda) = \frac{1}{n} \sum_{i=1}^{n} \ \prod_{j=1}^{m} \frac{1}{\sqrt{2\pi\lambda_j^2}} \cdot \exp\left[ -\frac{\left(x_j - x_{ij}\right)^2}{2\lambda_j^2} \right]$$

wherein $X$ is a variable with elements $X_j$, j = 1,... , m where m denotes the number of elements in the subset of input parameters. $\mathbf{D} = \{\mathbf{X_1,...,X_m}\}$ is a vector comprising subsets of input parameter values, i.e., an observations vector containing n measurements or determinations of m parameters and/or ambient variables. The j-th component of $\mathbf{X}_i$ is denoted by $X_{ij}$. $\wedge$ is the standard deviation vector, $\wedge = \{\lambda_1,..., \lambda_m\}$.

In the above described methods, step (b) can be performed for each ambient variable. In this way, an optimal set of predictors is determined for each ambient variable for which a forecast is desired.

In the above-described methods, the set of input parameters can comprise at least one of an air temperature, a ground temperature, a relative air humidity, a pressure, a solar radiation, a wind velocity, a pollutants concentration, a gradient of one of these parameters, and an average of one of these parameters.

With one or more of these input parameters, a high accuracy can be obtained when forecasting corresponding ambient variables.

Furthermore, the set of input parameters can comprise a parameter at at least one predetermined time or over a predetermined time period, in particular, before the time for which an ambient variable is to be forecast. Thus, the set of input parameters can comprise a parameter at a predetermined time relative to a forecast time.

In this way, measurements of input parameters at different times can be taken into account in a different way. For example, measurements of the air temperature one and two hours before the future forecast time can have a different influence on the ambient variable to be forecast such that both values are to be taken into account for prediction. In view of this, a parameter measured at different times can be considered as different input parameters.

The set of input parameters can comprise a parameter at at least one predetermined location. Thus, it can be considered that measurements at different positions can have a different influence on an ambient parameter to be predicted.

The at least one ambient variable can be at least one of an air temperature, a ground temperature, a relative air humidity, a pressure, a solar radiation, a wind velocity, a pollutants concentration, a gradient of one of these parameters, and an average of one of these parameters. In particular, an ambient variable can correspond to an input parameter.

Both in the case of the input parameters and the ambient variables, not only the values of a specific parameter can be used directly, but also its variation over a predetermined time period or interval (its gradient) or its average over a predetermined time interval can constitute relevant data to be used as input or as forecast output.

The at least one ambient variable can comprise an ambient variable value at at least one predetermined time or over a predetermined time period, in particular, after the time of forecast and/or the time of an input parameter.

Thus, the forecast can be directed to predicting the value of an ambient variable at a specific time, such as in three hours, or an average or a variation over a given time interval in the future. The time of forecast is the time at which the forecast is made. Alternatively, the forecast can be directed to predicting the value of an ambient variable at a specific time after the time of an input parameter, i.e. the time for which the input parameter is determined.

The ambient variable can comprise an ambient variable at at least one predetermined location.

The invention further provides a system for forecasting at least one ambient variable, in particular, a meteorological variable and/or a pollutants concentration, comprising

determining means being configured to determine a subset of input parameters for each ambient variable using the method as described above, and

a neural network being configured to forecast each ambient variable on the basis of the determined subset of input parameters.

The use of a neural network allows to adapt the forecast procedure to historical data so as to train the system and to readapt the system again during use. Thus, a highly reliable forecast system is obtained. By using a neural network being configured to base its forecast of the value of an ambient variable on an input parameter subset determined as described above, the system benefits from this preceding classification of the input parameters and takes into account an optimal subset of input parameters which reduces the required computing power while yielding results of high reliability.

The neural network can be a layered feedforward network. This allows an advantageous implementation of the system.

In particular, the neural network can be a three-layer network. Such a three-layer neural network comprising an input layer, a hidden layer, and an output layer provides high accuracy with manageable complexity.

In such a three-layer neural network, the hidden layer can comprise five neurons and/or the output layer can comprise one neuron. It turned out that excellent forecast results can be obtained with such a configuration.

In the above-described systems, the transfer function of the neural network can be a sigmoid function. In particular, the transfer function can be the hyperbolic tangent. Alternatively, it can be the Fermi function. Other transfer functions are possible as well.

In the above systems, the neural network can be trained using a backpropagation algorithm. Alternatively, the neural network can be trained using the Levenberg-Marquardt, the Gauss-Newton or the Steepest-descent algorithm. The training iteratively modifies the weights of the neural network in order to minimize the mean square error or the root mean square error on a data set of input and output data.

As an alternative to the feedforward neural network, a radial basis function network can be used in the above-described systems.

The system can further comprise computer means being configured as the neural network.

Furthermore, the can further comprise receiving means configured to.receive input parameter values. These receiving means, in particular, can be configured to receive input parameter values in a wireless or a wired way.

The system can further comprise outputting means configured to output a forecast ambient variable. In particular, the outputting means can comprise transmitting means to transmit a forecast ambient variable, for example, to another system configured to further process a predicted value of an ambient variable or to an end user.

The system can further comprise storage means configured to store an input parameter value and/or a forecast ambient variable. This enables the system to use these values (again) at a later stage.

The invention also provides a method for forecasting at least one ambient variable, in particular, a meteorological variable and/or a pollutants concentration, comprising the steps of:

for the at least one ambient variable, determining a subset of input parameters using one of the above-described methods,

for the at least one ambient variable, inputting the parameter values of the subset of input parameters to the neural network of the above described system.

In this method, the input step can be preceded by a step of collecting at least one input parameter value for the predetermined subset of input parameters.

In particular, the collecting step can be performed at regular time intervals. Thus, the input data is regularly updated so that an update of the forecast can be performed as well, resulting in more precise values for the forecast ambient variable.

The collecting step can comprise receiving the at least one input parameter from a database and/or from a weather station, in particular, a remote weather station.

The above described method can further comprise the step of outputting a forecast ambient variable. For example, the ambient variable can be output to another system configured to further process a predicted value of an ambient variable.

The above described method can further comprise the step of storing a forecast ambient variable. Such a stored forecast ambient variable can be used to adapt the neural network during use, for example.

The invention further provides a computer program product comprising one or more computer readable media having computer-executable instructions for performing the steps of one of the above-described methods when run on a computer.

BRIEF DESCRIPTION OF THE DRAWINGS

Further features and advantages of the invention will be described in reference to the figures.

Fig. 1    illustrates an example of a system for forecasting an ambient variable;

Fig. 2    shows a flow diagram illustrating a method for determining a subset of input parameters;

Fig. 3    illustrates the structure of a neural network for forecasting an ambient variable; and

Fig. 4    shows a flow diagram of a method for forecasting an ambient variable.

DETAILED DESCRIPTION

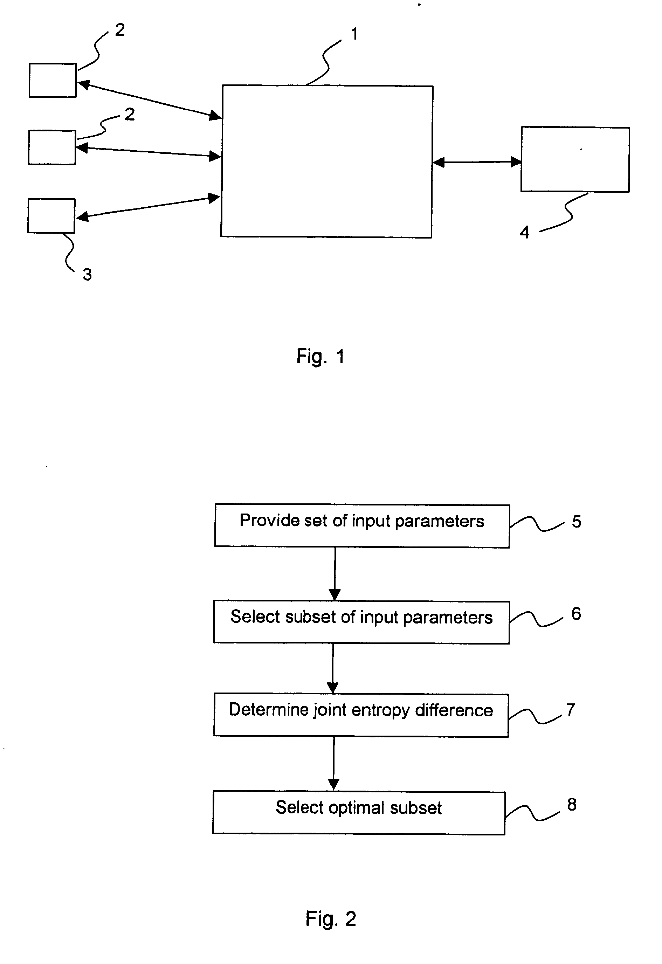

In Fig. 1, a system 1 for forecasting an ambient variable is illustrated schematically. As will be described in more detail in the following, this system comprises a neural network, which is configured to forecast one or more ambient variables for the basis of a predetermined subset of input parameters. In particular, the system 1 comprises a computer (not shown) to be configured to perform the functions of a neural network.

The system 1 is configured to receive input parameter values from a weather station 2 and/or a database 3. For this, the system 1 comprises receiving means (not shown) being configured to receive the input parameter values in a wireless or wired way.

The weather stations 2 can be present at the same location or position as the system 1 or at a remote location. In particular, a plurality of weather stations can be distributed over a predetermined area, for example, along a road. Depending on the ambient variable to be forecast and the required accuracy, the system 1 can be configured to receive input parameter values from one or more weather stations 2. The system 1 can be located at a central office where the data from a plurality of weather station is collected, processed and stored.

Each weather station 2 can be configured to measure or to determine an input parameter, particularly at predetermined time intervals such as every 15 minutes. For example, every quarter of an hour, the air temperature, ground temperature, and relative air humidity is determined. In addition to direct determination of such values, an average and/or gradient can be determined for one or more of these values. Such an average and/or gradient can be determined by the weather station or the system 1, in the latter case, after receipt of the required values.

After determining such an input parameter, the corresponding value is transmitted to the system 1 for further processing. Alternatively, the system 1 can be configured to request an input parameter value from a weather station 2. If a weather station 2 receives such a request, it can measure the requested input parameter transmit the corresponding value to the system 1. As an alternative, values of a predetermined set of input parameters are determined at regular time intervals; upon receipt of a corresponding request by system 1, some or all of these values are transmitted to the system.

When the system 1 is connected to a weather station 2, particularly a remote weather station 2, for receiving values of input parameters it is used on an online mode. The connection between a weather station 2 and system 1 can be implemented in different ways. For example, an internet connection can be present. Alternatively, the weather station and the system can be provided with a radio transmitter and/or receiver. Further types of connection are possible as well.

The system can also be used in an offline mode. In this case, it is not connected to a remote weather station 2 for receiving current or recent values of input parameters but the system 1 receives parameter values from a database 3. Preferably, this database 3 is present at the same location as the system 1. The database 3 can comprise input parameter values received from at least one weather station 2 at an earlier time. In particular, each weather station can be configured to provide each determined input parameter value to both the system 1 and to the database 3 (possibly via the system 1).

In the database 3, the input parameter values are stored, preferably together with the corresponding measurement time. For example, if a weather station gets disconnected from the system or does not provide an input parameter value for some other reason, the system can request a corresponding input parameter value from database 3. This input parameter value, for example, can be the last value determined for this input parameter, an average value determined from data in a historical database, or an input parameter value predicted by the system 1 for this time based on other input parameter values.

The system 1 further comprises outputting means (not shown) to output a forecast ambient variable and is connected to an output device 4. For example, the output device 4 can be a computer which is configured to further process the predicted values of the ambient variables. For example, the computer can be configured to determine the probability of ice or fog formation which can be further used for broadcast of traffic news.

As another example, the output device 4 can be a navigation system in a car. In this case, the predicted ambient variables can be used for determining a navigation route. Alternatively or additionally, depending on the circumstances, the predicted ambient variable value can be used to provide a warning to a driver. For example, if a predicted air or ground temperature is lower than a predetermined threshold, a frost warning can be output.

Furthermore, the output device 4 can be part of a traffic management system. In this case, the system 1 transmits each predicted value of an ambient variable value to such a traffic management system. In the traffic management system, the values are further processed, for example, for controlling electronic traffic signs accordingly or for providing traffic messages for broadcast.

The system, preferably, is also configured to transmit a predicted ambient variable value to a database 3 for storage thereof. In particular, such stored ambient variables can be used for adapting the neural network during use and/or prediction of ambient variables if the system is in an offline mode. The database 3 can be present at the same location as the system 1; in particular, it can even be contained in a storage means of the system 1.

In Fig. 2, a flow diagram illustrates an example of a method for determining a subset of input parameters for forecasting an ambient variable. In a first step 5, a set of input parameters is provided. This set of input parameters can comprise, for example, an air temperature, a ground temperature, a relative air humidity, a pressure, a solar radiation, a wind velocity and/or a pollutants concentration at a specific time and/or a specific position.

For example, the set of input parameters can comprise each of the previously mentioned parameters one, two and three hours before the time for which a specific ambient variable is to be forecast. Alternatively or additionally, the set of input parameters can comprise average values of specific parameters such as the average wind velocity over a given time interval. Alternatively or additionally, a gradient such as the humidity gradient over an interval of four hours ending one hour before the forecast time can be provided as well.

In the following step 6, at least two subsets of the provided set of input parameters are selected. In this way, the best group of predictors (input parameters) is to be determined to forecast a predictand (ambient variable). As an example, a selected subset comprises the humidity value one hour before the forecast time, the humidity value two hours before the forecast time, the humidity gradient over an interval of four hours ending one hour before the forecast time, and the air temperature value two hours before the forecast time, wherein the forecast time is the time for which an ambient variable such as the relative humidity is to be forecast.

Then, in the next step 7, a joint entropy difference $d(\mathbf{X}, Y)$ is to be determined. This entropy difference has the form:

$$
\begin{aligned}
d(\mathbf{X}, Y) &= e(\mathbf{X}, Y) - e(\mathbf{X}) = \\
&= -\int \log P(\mathbf{x}, y) \cdot P(\mathbf{x}, y) d\mathbf{x} dy + \\
&= +\int \log P(\mathbf{x}) \cdot P(\mathbf{x}) d\mathbf{x}
\end{aligned}
$$

where $\mathbf{X} = \{X_l...,X_m\}$ is a vector of m random variables of predictors (such as relative humidity, air temperature, etc., possibly at a predetermined time and/or location) that can be in a state $x=\{x_l,...,x_m\}$, i.e., have the values $x_l,...,x_m$. $Y$ denotes the predictand, namely an ambient variable. $P(\mathbf{X}, Y)$ denotes the probability that the random variables $X_l,...,X_m$, $Y$ are in the states $x_l,...,x_m,y$, whereas $P(\mathbf{X})$ is the probability that $\mathbf{X}$ is in the state $\mathbf{x}$. $e(\mathbf{X}, Y)$ and $e(\mathbf{X})$ denote the joint entropy of the corresponding random variables, whereas the entropy has the general form:

$$
e(X) = -\int_{-\infty}^{+\infty} \log(p(x)) \cdot p(x) dx .
$$

If the random variable $X$ takes only discrete values, the integral in the above equation will become a sum over these discrete values.

As the probability density functions $P$ are usually not know analytically, they can be estimated. In the present example, this estimation is based on the Parzen method. In the Parzen method, a probability density function is estimated by so-called kernel functions. As an example, a Gaussian kernel can be used. Preferably, the probability density functions are estimated using a sum of Gaussian kernels, each centered on a record or value of historical data. This sum of Gaussian kernels can have the form:

$$P_X^{\bullet}(X; \mathbf{D}, \Lambda) = \frac{1}{n} \sum_{i=1}^{n} \prod_{j=1}^{m} \frac{1}{\sqrt{2\pi\lambda_j^2}} \cdot \exp\left[ -\frac{\left(x_j - x_{ij}\right)^2}{2\lambda_j^2} \right]$$

where $\mathbf{D}=\{X_1,...,X_m\}$ is the vector of measurement values or observations and n the number of records or observations. Each element $X_i$, of the vector $\mathbf{D}$ has components $x_{ij}$, $i$ = 1,...n and $j$ = 1,...m, wherein $x_{ij}$ is the value of an input parameter at a given time. For example, $X_i$ can comprise (as components) the relative humidity value at a first time and at a second time, the air temperature value at the second time, and the humidity gradient over a time interval from a third time to the first time. The humidity gradient is given as the difference of the relative humidity value at the starting time and the end time of the given time interval. In the above equation, $\Lambda = \{\lambda_1,...,\lambda_m\}$ denotes the standard deviation vector.

In the above equation, the probability density function is estimated by a sum of multivariate Gaussian kernels, wherein the covariance matrix of each Gaussian kernel is a diagonal matrix which is zero except for the diagonal on which the standard deviation components are present. Such an estimation is particularly suitable if the input parameters and/or the ambient variable have no or only a small correlation.

Each standard deviation component in $\Lambda$ regulates the resolution of the estimator along the corresponding dimension (each corresponding to an input parameter). The joint entropy difference is determined for at least two selected input parameter subsets, but preferably for a plurality of input parameter subsets. It is preferred that the number of elements in each of the two subsets for which the joint entropy difference is determined is equal.

In the last step 8 of this method, the optimal subset according to the entropy difference criterion is selected. According to this criterion, the best set of predictors is that having the smallest joint entropy difference.

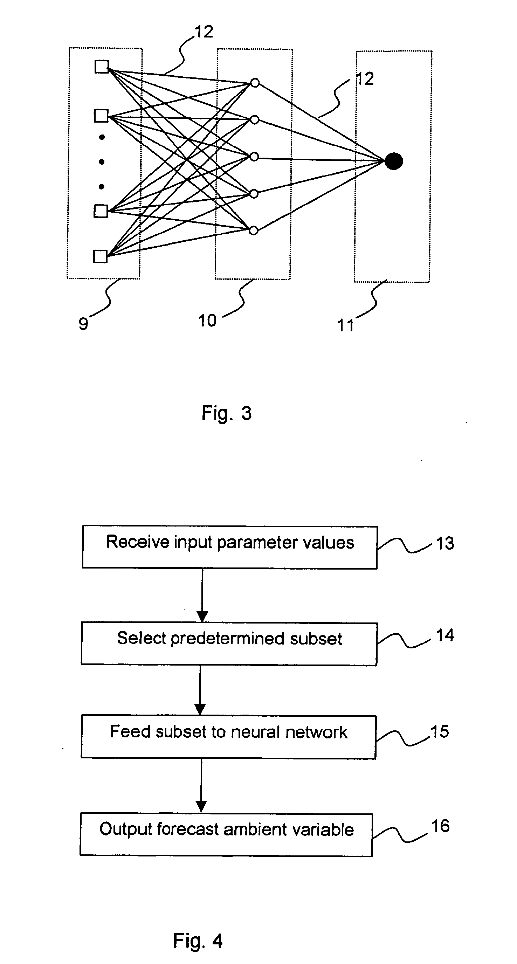

The structure of an example of a neural network for forecasting an ambient variable is illustrated in Fig. 3. The network shown in this figure is a feedforward three-layer network. It consists of an input layer 9, and hidden layer 10 and an output layer 11.

The neurons of the input layer are connected to the neurons of the hidden layer, and the neurons of the hidden layer are connected to the output neuron. To each of these connections 12, a weight is associated that is to be determined in the training phase to be described below. Furthermore, a transfer function is applied to a value arriving at a neuron of the hidden or of the output layer. Usually, the transfer function is a sigmoid function, i.e., a non-negative, everywhere monotonically increasing function that approaches the asymptotic saturation values 1 or 0 for x→±∞. As an example, the hyperbolic tangent can be used as the transfer function $\varphi(x)$ :

$$\varphi(x) = \tanh(x) = \frac{\exp(x) - \exp(-x)}{\exp(x) + \exp(-x)}$$

In the present case, the number of neurons in the input layer 9 depends on the number of elements of the selected optimal input parameter subset for the ambient variable to be forecast with this neural network.

Alternatively, additional input neurons can be provided for other input parameters of the set of input parameters not belonging to the selected subset; in this case, however, the weights between these input neurons and the neurons of the hidden layer can be set to zero. It is to be noted that the number of hidden neurons can be different (greater or smaller) than the number shown in Fig. 3.

In the example illustrated in Fig. 3, the number of neurons of the output layer is 1, i.e., this neural network is intended to forecast one ambient variable. However, it is also possible to modify such a neural network to enable forecasting of more than one ambient variable in parallel. In this case, the number of neurons in the input layer and the hidden layer can be different as well.

In order to adjust the weights, a training rule has to be fixed. In the present case, the backpropagation rule can be used as described, for example, in P. Werbos, "Beyond Regression: New Tools for Prediction and Analysis in the Behavioral Sciences", Ph.D. dissertation, Committee on Appl. Math., Harvard Univ., Cambridge, MA, Nov. 1974).

As an alternative, other algorithms such as a Levenberg-Marquardt or the Gauss-Newton algorithm can be used as well. In the case of the back propagation method, the weights are chosen so as to minimize square error E on the training set.

$$E = \sum_{t=1}^{T} E(t) = \frac{1}{2} \sum_{t=1}^{T} \sum_{i=1}^{n} [\hat{y}_i(t) - y_i(t)]^2$$

where n is the number of output neurons and T the training set dimension. Furthermore, $\hat{y}_i(t)$ is the observed output or ambient variable, and $y_i(t)$ is the network output or forecast ambient variable. In a first training step, a weight is assigned to each connection in the network. As an example, random numbers between -0.1 and 0.1 are chosen.

For the training of the network, the output $S_j$ of a neuron j of the hidden layer is written as

$$s_j = \varphi(\sum_k w_{jk} s_k)$$

where $s_k$ are the outputs of the neurons k in the input layer, i.e., the components $x_k$ of the input vector; $w_{jk}$ are the rates from the connections between the k-th input neuron and neuron j of the hidden layer. The outputs of the neurons of the output layer are

$$s_i = \varphi(\sum_j w_{ij} s_j)$$

and provide output values $y_i = s_i$; $w_{ij}$ are the connection weights between the hidden layer and the output layer. In these equations, the output layer has more than one output neuron.

The weights $w_{ij}$ and $w_{jk}$ are modified iteratively according to

$$w_{ab}^{new} = w_{ab}^{old} + \Delta w_{ab}$$

where

$$\Delta w_{ab} = -\eta \cdot \frac{\partial E}{\partial w_{ab}}$$

for sufficiently small $\eta$, one will then move along the direction of steepest decent of $E$. The derivatives are obtained using the chained rule. For the connections $w_{ij}$ between the hidden layer and the output layer, one has

$$\frac{\partial E}{\partial w_{ij}} = -\sum_t (y_{it} - s_i(\mathbf{x}_t)) \cdot \varphi'\left(\sum_{j'} w_{ij'} s_{j'}\right) \cdot s_j$$

and for the connections $w_{jk}$ from the input layer to the hidden layer

$$\frac{\partial E}{\partial w_{jk}} = -\sum_t \sum_i \left(y_{it} - s_i(\mathbf{x}_t)\right) \cdot \varphi'(\sum_{j'} w_{ij'}s_{j'}) \cdot w_{ij} \cdot \frac{\partial s_j}{\partial w_{jk}}$$

$$= -\sum_t \sum_i \left(y_{it} - s_i(\mathbf{x}_t)\right) \cdot \varphi'(\sum_{j'} w_{ij'}s_{j'}) \cdot w_{ij} \cdot \varphi'\left(\sum_{k'} w_{jk'}s_{k'}\right) \cdot s_k$$

Both expressions are sums over contributions from input training pairs $(x_t, y_t)$. If $\eta$ is small, only one $t$-term in the above equations for the derivatives can be taken into account at each iteration, provided that every term is on the average included equally often. Then, the following update rules are obtained

$$\Delta w_{ij} = \eta \cdot \varepsilon_{it} \cdot s_j \varphi'\left(\sum_{j'} w_{ij'}s_{j'}\right)$$

$$\Delta w_{jk} = \eta \cdot \sum_i \varepsilon_{it} \cdot s_k w_{ij} \varphi'(\sum_{j'} w_{ij'}s_{j'}) \cdot \varphi'\left(\sum_{k'} w_{jk'}s_{k'}\right)$$

for the weights $w_{ij}$ and $w_{jk}$ connecting hidden and output layer, and connecting input and hidden layer, respectively. In these equations, one has

$$\varepsilon_{it} = y_{it} - s_i(\mathbf{x}_t).$$

The weight updating process starts from the output layer and ends at the input layer. This iterative process stops when convergence is reached. The solution is a weight vector minimizing the square error above.

Fig. 4 shows a flow diagram illustrating an example of a method to forecast an ambient variable. This method is performed by a system such as system 1 shown in Fig. 1. As a prerequisite, this system has to be trained and configured as outlined before.

In a first step 13 of the method, the input parameter values are received, for example, corresponding input parameter values as obtained from a weather station and/or a database. These input parameter values can be received upon request or can be transmitted by a weather station, for example, without such a request.

In the following step 14, a predetermined subset is selected from the received input parameter values. This selection depends on what input parameters have been determined as optimal for forecasting a specific ambient variable as described above. If the input variables are received in step 13 upon request only, already such a request can be performed for a predetermined subset of optimal input parameter values. In this case, the received input parameter values already correspond to the predetermined subset of input parameters so that no additional selection would be necessary.

Then, in step 15, the selected subset values are fed to a neural network which has been trained and configured as described above. The input parameters are processed by the neural network and output in step 16. As already mentioned above, this output can be done to a computer, a car navigation system, and/or a traffic management system, for example. Furthermore, the forecast ambient variables can be stored in a database for further adaption of the network.

The steps of the method as illustrated in Fig. 4 can be performed at predetermined time intervals such as every 15 minutes or every hour. Alternatively, the steps are performed each time new input parameter values are received. Any further adaption of the network during use can be performed during forecast pauses, i.e., after newly received input parameter values have been processed and no further parameter values have been received yet.

Further modifications and variations of the present invention will be apparent to those skilled in the art in view of this description. Accordingly, the description is to be construed as illustrative only and is for the purpose of teaching those skilled in the art the general manner of carrying out the present invention. It is to be understood that the forms of the invention shown and described herein are to be taken as the presently preferred embodiments.

**Claims**

1.  Method for determining a subset of input parameters for forecasting at least one ambient variable, in particular, a meteorological variable and/or a pollutants concentration, comprising the steps of:

    (a) providing a set of input parameters,
    (b) for the at least one ambient variable, selecting at least two subsets of the set of input parameters,
    (c) for each subset, determining the difference of a joint entropy of the input parameters of the subset and the at least one ambient variable and a joint entropy of the input parameters of the subset,
    (d) selecting the subset of input parameters showing the smallest entropy difference.

2.  Method according to claim 1, wherein the joint entropy is determined using a predetermined value for each input parameter and/or a predetermined value for the at least one ambient variable.

3.  Method according to claim 1 or 2, wherein the probability density function for each joint entropy is estimated by the Parzen method.

4.  Method according to claim 3, wherein the probability density function is estimated using a Gaussian kernel.

5.  Method according to claim 4, wherein the probability function is estimated using a sum of multivariate Gaussian kernels, wherein the covariance matrix of each Gaussian kernel is a diagonal matrix.

6.  Method according to claim 5, wherein the probability function is estimated by:

$$P_X^*(X;\mathbf{D},\Lambda) = \frac{1}{n}\sum_{i=1}^{n}\ \prod_{j=1}^{m}\frac{1}{\sqrt{2\pi\lambda_j^2}}\cdot\exp\left[-\frac{\left(x_j - x_{ij}\right)^2}{2\lambda_j^2}\right]$$

    wherein $X$ is a variable with elements $x_j$, j = 1,..., m where m denotes the number of elements in the subset of input parameters, $\mathbf{D} = \{\mathbf{X_1},...,\mathbf{X_m}\}$ is a vector comprising subsets of input parameter values, $x_{ij}$ denotes the j-th component of $\mathbf{X_i}$, and $\Lambda = \{\lambda_1,...,\lambda_m\}$ is a standard deviation vector.

7.  Method according to one of the preceding claims, wherein step (b) is performed for each ambient variable.

8.  Method according to one of the preceding claims, wherein the set of input parameters comprises at least one of an air temperature, a ground temperature, a relative air humidity, a pressure, a solar radiation, a wind velocity, a pollutants concentration, a gradient of one of these parameters, and an average of one of these parameters.

9.  Method according to one of the preceding claims, wherein the set of input parameters comprises a parameter at at least one predetermined time or over at least one predetermined time period.

10. Method according to claim 9, wherein the set of input parameters comprises a parameter at at least one predetermined time or over at least one predetermined time period before the time for which an ambient variable is to be forecast.

11. Method according to one of the preceding claims, wherein the set of input parameters comprises a parameter at a least one predetermined location.

12. Method according to one of the preceding claims, wherein the at least one ambient variable is at least one of an air temperature, a ground temperature, a relative air humidity, a pressure, a solar radiation, a wind velocity, a pollutants concentration, a gradient of one of these parameters, and an average of one of these parameters.

13. Method according to one of the preceding claims, wherein the at least one ambient variable comprises an ambient variable at at least one predetermined time or over at least one predetermined time period.

14. Method according to one of the preceding claims, wherein the at least one ambient variable comprises an ambient variable at at least one predetermined location.

15. System for forecasting at least one ambient variable, in particular, a meteorological variable and/or a pollutants concentration, comprising

determining means being configured to determine a subset of input parameters for each ambient variable using the method according to one of the preceding claims, and
a neural network being configured to forecast each ambient variable on the basis of the determined subset of input parameters.

16. System according to claim 15, wherein the neural network is a layered feedforward network.

17. System according to claim 16, wherein the neural network is a three-layer network.

18. System according to claim 17, wherein the hidden layer comprises five neurons and/or the output layer comprises one neuron.

19. System according to one of the claims 15 - 18, wherein the transfer function of the neural network is the hyperbolic tangent.

20. System according to one of the claims 15-19, wherein the neural network is trained using a backpropagation algorithm.

21. System according to one of the claims 15 - 20, further comprising computer means being configured as the neural network.

22. System according to one of the claims 15 - 21, further comprising receiving means configured to receive input parameter values.

23. System according to one of the claims 15 - 22, further comprising outputting means configured to output a forecast ambient variable.

24. System according to one of the claims 15 - 23, further comprising storage means configured to store an input parameter value and/or a forecast ambient variable.

25. Method for forecasting at least one ambient variable, in particular, a meteorological variable and/or a pollutants concentration, comprising the steps of:

for the at least one ambient variable, determining a subset of input parameters using the method according to one of the claims 1 - 14,
for the at least one ambient variable, inputting parameter values corresponding to the predetermined subset of input parameters to a neural network of a system according to one of the claims 15 - 24.

26. Method according to claim 25 wherein the input step is preceded by a step of collecting at least one input parameter value for the predetermined subset of input parameters.

27. Method according to claim 25, wherein the collecting step is performed at regular time intervals.

28. Method according to claim 25 or 26, wherein the collecting step comprises receiving the at least one input parameter from a database and/or from a weather station, in particular, a remote weather station.

29. Method according to one of the claims 25 - 28, further comprising the step of outputting a forecast ambient variable.

30. Method according to one of the claims 25 - 29, further comprising the step of storing a forecast ambient variable.

**31.** Computer program product comprising one or more computer readable media having computer-executable instructions for performing the steps of the method according to one of the claims 1 - 14 or 25 - 30 when run on a computer.

**Amended claims in accordance with Rule 86(2) EPC.**

**1.** Method for determining a subset of input parameters for forecasting at least one ambient variable comprising a pollutants concentration, comprising the steps of:

> (a) providing a set of input parameters,
> (b) for the at least one ambient variable, selecting at least two subsets of the set of input parameters,
> (c) for each subset, determining the difference of a joint entropy of the input parameters of the subset and the at least one ambient variable and a joint entropy of the input parameters of the subset,
> (d) selecting the subset of input parameters showing the smallest entropy difference.

**2.** Method according to claim 1, wherein the joint entropy is determined using a predetermined value for each input parameter and/or a predetermined value for the at least one ambient variable.

**3.** Method according to claim 1 or 2, wherein the probability density function for each joint entropy is estimated by the Parzen method.

**4.** Method according to claim 3, wherein the probability density function is estimated using a Gaussian kernel.

**5.** Method according to claim 4, wherein the probability function is estimated using a sum of multivariate Gaussian kernels, wherein the covariance matrix of each Gaussian kernel is a diagonal matrix.

**6.** Method according to claim 5, wherein the probability function is estimated by:

$$P_X^*(X; \mathbf{D}, \Lambda) = \frac{1}{n} \sum_{i=1}^{n} \prod_{j=1}^{m} \frac{1}{\sqrt{2\pi\lambda_j^2}} \cdot \exp\left[ -\frac{(x_j - x_{ij})^2}{2\lambda_j^2} \right]$$

wherein X is a variable with elements $X_j$, j = 1,... , m where m denotes the number of elements in the subset of input parameters, $\mathbf{D} = \{X_1,..., X_m\}$ is a vector comprising subsets of input parameter values, $X_{ij}$ denotes the j-th component of $X_i$, and $\Delta = \{\lambda_1,..., \lambda_m\}$ is a standard deviation vector.

**7.** Method according to one of the preceding claims, wherein step (b) is performed for each ambient variable.

**8.** Method according to one of the preceding claims, wherein the set of input parameters comprises at least one of an air temperature, a ground temperature, a relative air humidity, a pressure, a solar radiation, a wind velocity, a pollutants concentration, a gradient of one of these parameters, and an average of one of these parameters.

**9.** Method according to one of the preceding claims, wherein the set of input parameters comprises a parameter at at least one predetermined time or over at least one predetermined time period.

**10.** Method according to claim 9, wherein the set of input parameters comprises a parameter at at least one predetermined time or over at least one predetermined time period before the time for which an ambient variable is to be forecast.

**11.** Method according to one of the preceding claims, wherein the set of input parameters comprises a parameter at a least one predetermined location.

**12.** Method according to one of the preceding claims, wherein the at least one ambient variable is at least one of an air temperature, a ground temperature, a relative air humidity, a pressure, a solar radiation, a wind velocity, a pollutants concentration, a gradient of one of these parameters, and an average of one of these parameters.

**13.** Method according to one of the preceding claims, wherein the at least one ambient variable comprises an ambient variable at at least one predetermined time or over at least one predetermined time period.

**14.** Method according to one of the preceding claims, wherein the at least one ambient variable comprises an ambient variable at at least one predetermined location.

**15.** System for forecasting at least one ambient variable comprising a pollutants concentrate, comprising:

determining means being configured to determine a subset of input parameters for each ambient variable using the method according to one of the preceding claims, and
a neural network being configured to forecast each ambient variable on the basis of the determined subset of input parameters.

**16.** System according to claim 15, wherein the neural network is a layered feedforward network.

**17.** System according to claim 16, wherein the neural network is a three-layer network.

**18.** System according to claim 17, wherein the hidden layer comprises five neurons and/or the output layer comprises one neuron.

**19.** System according to one of the claims 15-18, wherein the transfer function of the neural network is the hyperbolic tangent.

**20.** System according to one of the claims 15-19, wherein the neural network is trained using a backpropagation algorithm.

**21.** System according to one of the claims 15 - 20, further comprising computer means being configured as the neural network.

**22.** System according to one of the claims 15-21, further comprising receiving means configured to receive input parameter values.

**23.** System according to one of the claims 15-22, further comprising outputting means configured to output a forecast ambient variable.

**24.** System according to one of the claims 15 - 23, further comprising storage means configured to store an input parameter value and/or a forecast ambient variable.

**25.** Method for forecasting at least one ambient variable comprising a pollutants concentration, comprising the steps of:

for the at least one ambient variable, determining a subset of input parameters using the method according to one of the claims 1-14,
for the at least one ambient variable, inputting parameter values corresponding to the predetermined subset of input parameters to a neural network of a system according to one of the claims 15 - 24.

**26.** Method according to claim 25 wherein the input step is preceded by a step of collecting at least one input parameter value for the predetermined subset of input parameters.

**27.** Method according to claim 25, wherein the collecting step is performed at regular time intervals.

**28.** Method according to claim 25 or 26, wherein the collecting step comprises receiving the at least one input parameter from a database and/or from a weather station, in particular, a remote weather station.

**29.** Method according to one of the claims 25 - 28, further comprising the step of outputting a forecast ambient variable.

**30.** Method according to one of the claims 25 - 29, further comprising the step of storing a forecast ambient variable.

**31.** Computer program product comprising one or more computer readable media having computer-executable instructions for performing the steps of the method according to one of the claims 1 - 14 or 25 - 30 when run on a computer.

Fig. 1

Fig. 2

Fig. 3

| Receive input parameter values | 13 |
| Select predetermined subset | 14 |
| Feed subset to neural network | 15 |
| Output forecast ambient variable | 16 |

Fig. 4

# EP 1 847 856 A1

**EP 1 847 856 A1**

**European Patent Office**

**EUROPEAN SEARCH REPORT**

Application Number

EP 06 00 8341

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PASERO E ET AL: "Artificial neural networks for meteorological nowcast" IEEE INTERNATIONAL CONFERENCE ON COMPUTATIONAL INTELLIGENCE FOR MEASUREMENT SYSTEMS AND APPLICATIONS 2004 (CIMSA 2004), 14-16 JULY 2004, BOSTON, MA, USA, 14 July 2004 (2004-07-14), pages 36-39, XP010773369 IEEE ISBN: 0-7803-8341-9 * sections III and IV * * section V, first paragraph * ----- | 1-31 | INV. G01W1/10 |
| X | COSTA M ET AL: "INFO: An artificial neural system to forecast ice formation on the road" IEEE INTERNATIONAL CONFERENCE ON COMPUTATIONAL INTELLIGENCE FOR MEASUREMENT SYSTEMS AND APPLICATIONS 2003 (CIMSA 2003), 29-31 JULY 2003, LUGANO, SWITZERLAND, 29 July 2003 (2003-07-29), pages 216-221, XP010655265 IEEE ISBN: 0-7803-7783-4 * page 216, right-hand column - page 218, left-hand column * ----- -/-- | 1-31 | **TECHNICAL FIELDS SEARCHED (IPC)**<br><br>G01W |

The present search report has been drawn up for all claims

| Place of search | Date of completion of the search | Examiner |
|---|---|---|
| Berlin | 25 January 2007 | DOMINGO VECCHIONI, M |

**European Patent Office**

# EUROPEAN SEARCH REPORT

Application Number

EP 06 00 8341

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PASERO E ET AL: "NEMEFO: NEural MEteorological FOrecast" 12TH INTERNATIONAL ROAD WEATHER CONFERENCE 2004, 16-18 JUNE 2004, BINGEN, GERMANY, [Online] 16 June 2004 (2004-06-16), pages 1-8, XP002416778 SIRWEC Retrieved from the Internet: URL:http://www.iac.ethz.ch/staff/wueest/sirwec/conferences/bingen2004/topic_ii/sirwec-ii-04-pasero.pdf> [retrieved on 2007-01-25] * sections I to IV * ----- | 1-31 | |

TECHNICAL FIELDS SEARCHED (IPC)

The present search report has been drawn up for all claims

| Place of search | Date of completion of the search | Examiner |
|---|---|---|
| Berlin | 25 January 2007 | DOMINGO VECCHIONI, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **E. PARZEN.** On Estimation of a Probability Density Function and Mode. *Ann. Math. Stat.,* 1962, vol. 33, 1065-1076

- Beyond Regression: New Tools for Prediction and Analysis in the Behavioral Sciences. **P. WERBOS.** Appl. Math. Harvard Univ, November 1974